# EUROPEAN PATENT APPLICATION

(11) **EP 4 580 129 A1**
(43) Date of publication of application: **02.07.2025**
(21) Application number: 24775152.2
(22) Date of filing: 18.03.2024
(51) Int. Cl.: H04L 12/40, H01M 10/42

(54) **APPARATUS AND METHOD FOR REQUESTING BATTERY INFORMATION**

(30) Priority: 21.03.2023 KR 20230036903
(71) Applicant: LG Energy Solution, Ltd., Seoul 07335 (KR)
(72) Inventor: CHOI, Ho-Deuk, Daejeon 34122 (KR)
(74) Representative: Plasseraud IP
(86) International application number: PCT/KR2024/003349
(87) International publication number: WO 2024/196104

(57) **Abstract**

Disclosed is an apparatus for requesting battery information, which includes a communication unit configured to communicate with a battery information provision device; a target determination unit configured to determine target information to be obtained and determine a target battery for which the target information is to be obtained from a preset battery list; and a control unit configured to generate a request packet including target battery information about the target battery and the target information, transmit the generated request packet to the battery information provision device through the communication unit, and receive a response packet including battery information of the target battery corresponding to the target information from the battery information provision device through the communication unit in response to the request packet.

## Description

### TECHNICAL FIELD

The present application claims priority to Korean Patent Application No. 10-2023-0036903 filed on March 21, 2023 in the Republic of Korea, the disclosures of which are incorporated herein by reference.

The present disclosure relates to an apparatus and method for requesting battery information, and more particularly, to an apparatus and method for requesting battery information, which may efficiently request battery information for battery.

### BACKGROUND ART

Recently, the demand for portable electronic products such as notebook computers, video cameras and portable telephones has increased sharply, and electric vehicles, energy storage batteries, robots, satellites and the like have been developed in earnest. Accordingly, high-performance batteries allowing repeated charging and discharging are being actively studied.

Currently, batteries commercially available include nickel-cadmium batteries, nickel hydrogen batteries, nickel-zinc batteries, lithium batteries and the like. Among them, the lithium batteries are in the limelight since they have almost no memory effect compared to nickel-based batteries and also have very low self-charging rate and high energy density.

Meanwhile, devices equipped with such batteries include various ECUs (Electronic Control Units). The ECUs may communicate with each other and provide information or receive information from other ECUs. Taking vehicles as an example, various functions and controls are increasing in vehicles. In particular, as electric vehicles equipped with batteries become commercialized, the amount of data transmitted and received between ECUs is increasing. Therefore, communication standards and technologies are being proposed to improve the efficiency of data communication between ECUs.

For example, Patent Literature 1 discloses an invention in which the data frame structure for CAN (Controller Area Network) communication is changed to increase the data amount, thereby improving the stability of data reception and improving the communication speed and thus improving the traffic load on the CAN bus.

However, Patent Literature 1 only discloses a configuration in which the receiving side of the data changes the reception mode to a high-speed mode or normal mode depending on whether the data length exceeds 8 bytes. Since the traffic load is improved only by changing the reception mode in Patent Literature 1, this technology cannot be easily applied to devices such as electric vehicles where various information about the battery cell must be provided in real time. In other words, according to Patent Literature 1, there is a problem that data transmission may take a considerable amount of time because the transmitting side must transmit a single piece of information about each battery cell.

Also, Patent Literature 1 does not disclose at all a configuration that selectively requests and responds to battery information for only some battery cells among a plurality of battery cells. Therefore, all battery information for the plurality of battery cells must be received and only the desired battery information must be extracted, so there is a problem that it may take a considerable amount of time to obtain the desired battery information.

(Patent Literature 1) KR 10-1573637 B1

### DISCLOSURE

### Technical Problem

The present disclosure is designed to solve the problems of the related art, and therefore the present disclosure is directed to providing an apparatus and method for requesting battery information, which may efficiently request battery information for a target battery among a plurality of batteries.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided an apparatus for requesting battery information, comprising: a communication unit configured to communicate with a battery information provision device; a target determination unit configured to determine target information to be obtained and determine a target battery for which the target information is to be obtained from a preset battery list; and a control unit configured to generate a request packet including target battery information about the target battery and the target information, transmit the generated request packet to the battery information provision device through the communication unit, and receive a response packet including battery information of the target battery corresponding to the target information from the battery information provision device through the communication unit in response to the request packet.

The control unit may be configured to generate a request group including the target information and the target battery information, and generate the request packet to include the generated request group.

The control unit may be configured to generate the target battery information to include preset first number information when the target battery is determined to be all batteries included in the battery list.

The control unit may be configured to generate the target battery information to include preset second number information and offset information of the target battery when the target battery is determined to be some of the batteries included in the battery list.

When the target battery is plural, the control unit may be configured to determine an integration offset based on offsets corresponding to the plurality of target batteries and generate the offset information according to the determined integration offset.

The control unit may be configured to determine the integration offset by changing a bit corresponding to each of the plurality of target batteries in an initial offset in which a bit corresponding to each battery included in the battery list is preset.

The control unit may be configured to generate the request packet to include packet size information of the request packet, packet identification information of the request packet, and information about the request group.

The control unit may be configured to include packet type information of the request packet at a predetermined position in the target battery information.

When the target information is plural, the control unit may be configured to generate a plurality of request groups including target battery information corresponding to each target information, and generate the request packet to include the plurality of request groups.

In another aspect of the present disclosure, there is also provided a method for requesting battery information, comprising: a target determination step of determining target information to be obtained and determining a target battery for which the target information is to be obtained from a preset battery list; a request packet generation step of generating a request packet including target battery information about the target battery and the target information; a request packet transmission step of transmitting the generated request packet; and a response packet receiving step of receiving a response packet including battery information of the target battery corresponding to the target information in response to the request packet.

In still another aspect of the present disclosure, there is also provided a battery information communication system, comprising the apparatus for requesting battery information; and a battery information provision device. The battery information provision device may include a communication module configured to communicate with the apparatus for requesting battery information; a battery information obtaining module configured to receive the request packet from the apparatus for requesting battery information through the communication module, determine the target battery from the request packet using the battery list, and obtain the battery information corresponding to the target information for the determined target battery; and a control module configured to generate the response packet including the target information and the battery information, and transmit the response packet to the apparatus for requesting battery information through the communication module in response to the request packet.

### Advantageous Effects

According to one aspect of the present disclosure, there is an advantage that battery information about a target battery among a plurality of batteries may be efficiently requested. In particular, since it is possible to receive only battery information for the target battery without receiving battery information for all of the plurality of batteries as response information, there is an advantage that battery information for the target battery may be efficiently requested and confirmed.

The effects of the present disclosure are not limited to the effects mentioned above, and other effects not mentioned will be clearly understood by those skilled in the art from the description of the claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically illustrating an apparatus for requesting battery information according to an embodiment of the present disclosure.
FIG. 2 is a diagram schematically showing a battery list according to an embodiment of the present disclosure.
FIGS. 3 and 4 are diagrams schematically showing a first request packet according to an embodiment of the present disclosure.
FIGS. 5 and 6 are diagrams schematically showing a second request packet according to an embodiment of the present disclosure.
FIG. 7 is a diagram schematically showing a first embodiment of a request packet according to an embodiment of the present disclosure.
FIG. 8 is a diagram schematically showing a second embodiment of the request packet according to an embodiment of the present disclosure.
FIG. 9 is a diagram schematically showing a third embodiment of the request packet according to an embodiment of the present disclosure.
FIG. 10 is a diagram schematically showing a method for requesting battery information according to another embodiment of the present disclosure.
FIG. 11 is a diagram schematically showing a battery information communication system according to still another embodiment of the present disclosure.
FIG. 12 is a diagram schematically showing a first embodiment of a response packet according to an embodiment of the present disclosure.
FIG. 13 is a diagram schematically showing a second embodiment of the response packet according to an embodiment of the present disclosure.

### BEST MODE

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Additionally, in describing the present disclosure, when it is deemed that a detailed description of relevant known elements or functions renders the key subject matter of the present disclosure ambiguous, the detailed description is omitted herein.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise.

In addition, throughout the specification, when a portion is referred to as being "connected" to another portion, it is not limited to the case that they are "directly connected", but it also includes the case where they are "indirectly connected" with another element being interposed between them.

Hereinafter, preferred embodiments of the present disclosure will be described in detail with reference to the accompanying drawings.

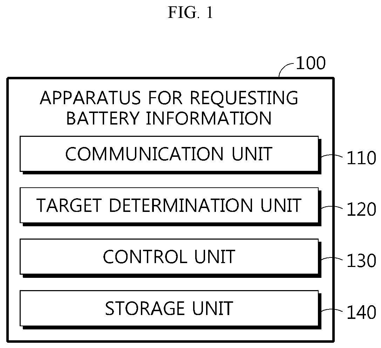

FIG. 1 is a diagram schematically illustrating an apparatus 100 for requesting battery information according to an embodiment of the present disclosure.

Referring to FIG. 1, the apparatus 100 for requesting battery information may include a communication unit 110, a target determination unit 120, and a control unit 130.

The communication unit 110 may be configured to communicate with a battery information provision device 200.

Here, the battery information provision device 200 may be a device that provides battery information requested by the apparatus 100 for requesting battery information. For example, the communication unit 110 may be connected to the battery information provision device 200 to enable communication through wired and/or wireless communication.

The target determination unit 120 may be configured to determine target information to be obtained.

Specifically, the target information may be determined from various battery information indicating the state of the battery, and one or more battery information may be determined as the target information.

For example, the battery information may include various information such as voltage, current, temperature, resistance, SOC (State of charge), and SOH (State of health), and the target determination unit 120 may determine one or more of the various battery information as the target information.

Meanwhile, the battery means one physically separable independent cell having a negative electrode terminal and a positive electrode terminal. For example, a lithium-ion battery or a lithium polymer battery may be regarded as a battery. In addition, the battery may mean a battery module in which a plurality of cells are connected in series and/or parallel. Hereinafter, for convenience of description, a battery will be described as meaning one independent cell.

The target determination unit 120 may be configured to determine a target battery for which target information is to be obtained from a preset battery list.

Specifically, the battery list may include identification information set for each battery. Here, the identification information may be expressed as an offset. The target determination unit 120 may determine the offset of the target battery for which target information is to be obtained from the battery list.

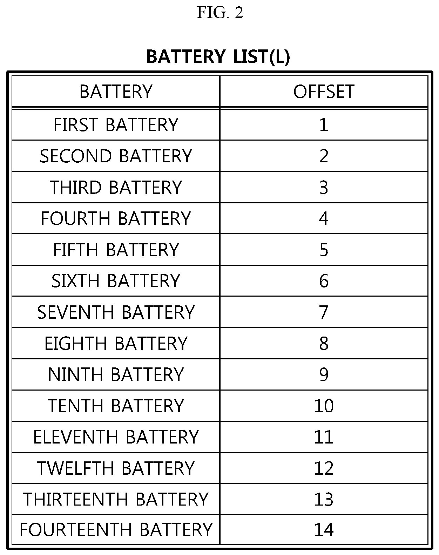

FIG. 2 is a diagram schematically showing a battery list L according to an embodiment of the present disclosure.

For example, in the embodiment of FIG. 2, offsets for the first to fourteenth batteries may be stored in the battery list L. The offset of the n^{th} battery (where n is a natural number) may be preset to n. Since the battery must be identified through the offset, the offsets set for batteries may not overlap with each other.

The control unit 130 may be configured to generate a request packet including target battery information about the target battery and the target information.

For example, it is assumed that the target information is "voltage", and the target battery is a "fifth battery". The determination target unit 120 may determine the target information as "voltage" and the target battery information as "offset for the fifth battery." Referring to FIG. 2, the target determination unit 120 may determine the offset for the fifth battery to be "5". Also, the control unit 130 may generate a request packet to include "voltage" and "5". That is, the request packet generated by the control unit 130 may be a communication packet requesting the voltage value for the fifth battery.

The control unit 130 may be configured to transmit the generated request packet to the battery information provision device 200 through the communication unit 110. Also, the control unit 130 may be configured to receive a response packet including battery information of the target battery corresponding to the target information from the battery information provision device 200 through the communication unit 110 in response to the request packet.

In the former embodiment, when the control unit 130 transmits a request packet requesting the voltage value for the fifth battery to the battery information provision device 200, the control unit 130 may receive a response packet for the voltage value of the fifth battery from the battery information provision device 200.

In other words, the apparatus 100 for requesting battery information according to an embodiment of the present disclosure may selectively request only target information for the target battery for which target information is to be confirmed among the plurality of batteries included in the battery list L. In other words, since the apparatus 100 for requesting battery information requests target information by specifying the target battery, the process of selecting only the target information for the target battery after receiving target information for all batteries may be omitted. Therefore, the apparatus 100 for requesting battery information may improve processing speed in the process of obtaining target information about the target battery and has the advantage of saving system resources unnecessarily consumed.

Meanwhile, the control unit 130 included in the apparatus 100 for requesting battery information may optionally include processors, application-specific integrated circuits (ASIC), other chipsets, logic circuits, registers, communication modems, data processing devices, etc. known in the art to execute various control logics performed in the present disclosure. Also, when the control logic is implemented as software, the control unit 130 may be implemented as a set of program modules. At this time, the program module may be stored in the memory and executed by the control unit 130. The memory may be inside or outside the control unit 130 and may be connected to the control unit 130 by various well-known means.

In addition, the apparatus 100 for requesting battery information may further include a storage unit 140. The storage unit 140 may store data necessary for operation and function of each component of the apparatus 100 for requesting battery information, data generated in the process of performing the operation or function, or the like. The storage unit 140 is not particularly limited in its kind as long as it is a known information storage means that can record, erase, update and read data. As an example, the information storage means may include RAM, flash memory, ROM, EEPROM, registers, and the like. In addition, the storage unit 140 may store program codes in which processes executable by the control unit 130 are defined.

For example, the battery list L may be stored in advance in the storage unit 140. The control unit 130 may access the storage unit 140 and obtain the battery list L.

The control unit 130 may be configured to generate a request group including the target information and the target battery information.

Specifically, the request group may include the target information and the target battery information determined by the target determination unit 120. In other words, through the request group, the target battery and the target information requested by the request packet may be confirmed.

The control unit 130 may be configured to generate a request packet to include the generated request group.

First, the control unit 130 may be configured to generate a request packet according to a request data amount corresponding to the generated request group.

Specifically, the control unit 130 may be configured to calculate the request data amount corresponding to the generated request group.

For example, the control unit 130 may be configured to calculate the request data amount by calculating the size of total data required for the request group.

Preferably, the data size of each of the target information and the target battery information that can be included in the request group may be a predetermined fixed value. For example, the data size of the target information and the target battery information may be 2 bytes. Accordingly, the control unit 130 may calculate the request data amount corresponding to the request group by calculating the size of the total data required for the request group in consideration of the data size of the target information and the target battery information included in the request group.

For example, as the number of request groups increases, the request data amount may increase. That is, the control unit 130 may calculate the request data amount by calculating the size of total data required for one or more request groups.

The control unit 130 may be configured to generate a request packet with a packet structure corresponding to the calculated request data amount among a plurality of preset packet structures.

Specifically, the packet structure that can be generated as a request packet may be set in multiple numbers depending on the amount of data that can be included. Hereinafter, for convenience of explanation, it will be explained that the plurality of preset packet structures include a first packet structure and a second packet structure.

For example, the first packet structure the and second packet structure may be distinguished according to the amount of data they can be included. For example, if the calculated request data amount is less than a reference amount, the control unit 130 may generate a request packet with a preset first packet structure. Conversely, the control unit 130 may be configured to generate a request packet with a preset second packet structure if the calculated request data amount is greater than or equal to the reference amount.

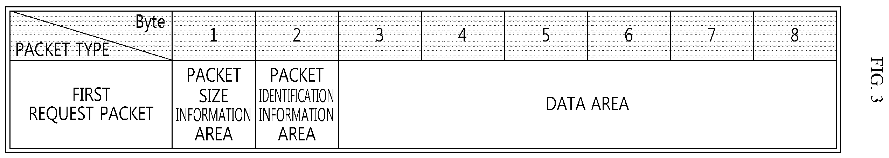

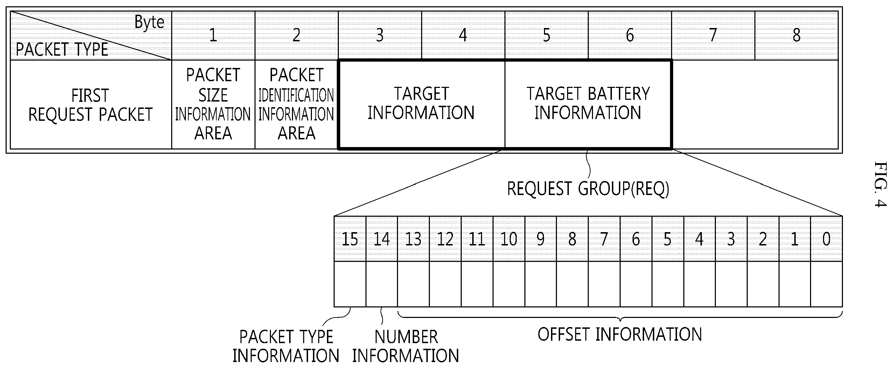

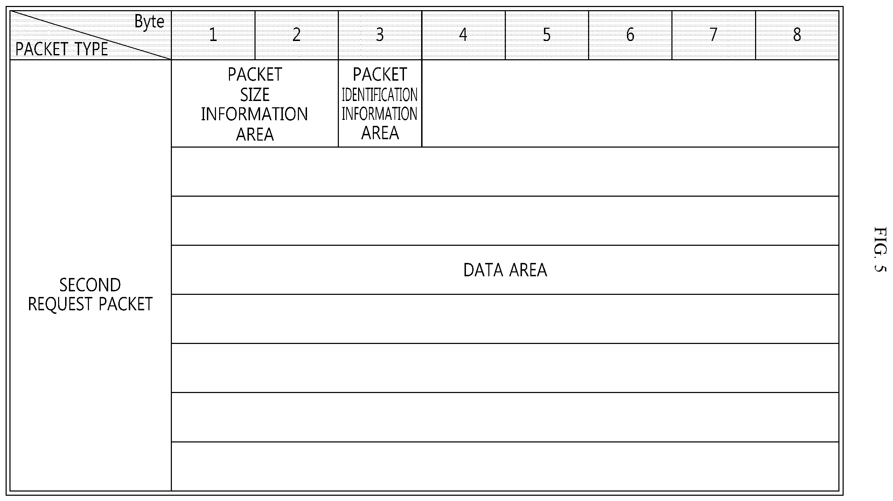

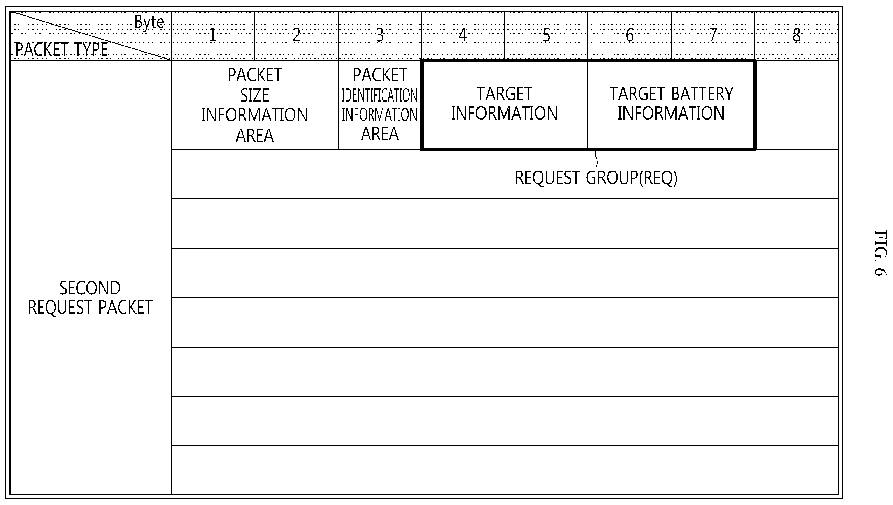

FIGS. 3 and 4 are diagrams schematically showing a first request packet according to an embodiment of the present disclosure. FIGS. 5 and 6 are diagrams schematically showing a second request packet according to an embodiment of the present disclosure.

Specifically, the embodiment of FIGS. 3 and 4 is an example of a first request packet according to the first packet structure. The embodiment of FIGS. 5 and 6 is an example of a second request packet according to the second packet structure.

Referring to FIGS. 3 and 4, the first packet structure may be a packet structure of a CAN (Controller Area Network) communication channel that may include 8 bytes of data.

Referring to FIGS.5 and 6, the second packet structure may be a packet structure of a CAN-FD (Controller Area Network with flexible data rate) communication channel that may include 64 bytes of data.

For example, if the request data amount is 6 bytes or less, the request packet may be generated in the first packet structure, and if the request data amount exceeds 6 bytes, the request packet may be generated in the second packet structure.

Preferably, the control unit 130 may be configured to generate a request packet to include packet size information of the request packet, packet identification information of the request packet, and information about the request group.

In the embodiments of FIGS. 3 and 5, the first packet structure and the second packet structure may commonly include a packet size information area, a packet identification information area, and a data area.

The packet size information area may include information about the total data amount of the request packet. For example, the packet size information area may include packet size information (Data Length Code, DLC) of the request packet.

The packet identification information area may include identification information for the request packet. Here, the identification information may be a Service ID according to the protocol. For example, according to the UDS 14229 protocol, when requesting battery state information about voltage, current, temperature, and SOC as the target information, the Service ID may be 0x22. In this case, 0x22 may be included in the packet identification information area as the identification information of the corresponding request packet.

In the embodiments of FIGS. 4 and 6, the data area may include a request group (REQ). Also, the request group (REQ) may include the target information and the target battery information.

The control unit 130 may be configured to include packet type information of the request packet at a predetermined position of the target battery information.

Specifically, the control unit 130 may include packet type information of the request packet transmitted to the battery information provision device 200 in the target battery information.

In the embodiment of FIG. 4, the control unit 130 may indicate the packet type information through the first bit (i.e., highest bit) of the target battery information.

For example, if the request packet is a request packet based on the first packet structure, the control unit 130 may set the packet type information included in the target battery information to "0". Conversely, if the request packet is a request packet based on the second packet structure, the control unit 130 may set the packet type information included in the target battery information to "1".

The control unit 130 may be configured to generate the target battery information to include preset first number information when the target battery is determined to be all batteries included in the battery list L.

Hereinafter, it is assumed that the first number information is set to "0" and the second number information is set to "1".

Specifically, the control unit 130 may include the number information of the target battery in the target battery information. For example, in the embodiment of FIG. 4, the control unit 130 may indicate the number information of the target battery through the second bit (i.e., the second-highest bit) of the target battery information.

For example, if the target battery is determined to be all batteries included in the battery list L, the control unit 130 may set the number information included in the target battery information to "0". Conversely, if the target battery is determined to be some of the batteries included in the battery list L, the control unit 130 may set the number information included in the target battery information to "1".

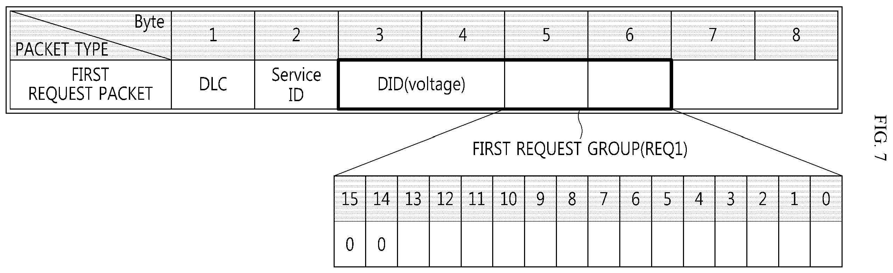

FIG. 7 is a diagram schematically showing a first embodiment of a request packet according to an embodiment of the present disclosure.

In the embodiment of FIG. 7, it is assumed that the target information is voltage, and the target battery is set to all batteries included in the battery list L. The control unit 130 may set the target information to a value representing "voltage". Also, the control unit 130 may set the packet type information included in the target battery information to "0". That is, because the control unit 130 selects the request packet according to the first packet structure in consideration of the request data amount, the packet type information may be set to "0". Lastly, the control unit 130 may set the number information to "0" because the target battery is all batteries included in the battery list L.

For example, when the number information is set to "0", the control unit 130 may set all offset information to "0" or "1". That is, the control unit 130 may uniformly set the offset information for all batteries.

As another example, when the number information is set to "0", the control unit 130 may not allocate a data area where the offset information is recorded. That is, in order to minimize the size of the request packet, the control unit 130 may not allocate data for the area representing the offset information when the number information is set to "0". Even if the data area for the offset information is not allocated, the battery information provision device 200 may confirm that the target battery is all batteries included in the battery list L by checking the number information set to "0".

If the target battery is determined to be some of the batteries included in the battery list L, the control unit 130 may be configured to generate the target battery information to include the preset second number information and the offset information of the target battery.

Specifically, the control unit 130 may include the number information and the offset information of the target battery in the target battery information. For example, in the embodiment of FIG. 4, the control unit 130 may indicate the number information of the target battery through the second bit (i.e., the second-highest bit) of the target battery information. Also, the control unit 130 may indicate the offset of the target battery through the remaining bits of the target battery information.

For example, if the target battery is determined to be some batteries included in the battery list L, the control unit 130 may set the number information included in the target battery information to "1". Also, the control unit 130 may include the offset information about the target battery in the remaining data area of the target battery information.

That is, the target battery information may include the packet type information of the request packet, the number information of the target battery, and the offset information of the target battery. Also, the target battery information and the target information may be included in the request group. Finally, the packet size information, the packet identification information, and the request group may be included in the request packet.

When there are a plurality of target batteries, the control unit 130 may be configured to determine an integration offset based on the offset corresponding to the plurality of target batteries and generate offset information according to the determined integration offset.

Specifically, as the offset of the plurality of target batteries is represented more efficiently, the size of the request packet may decrease. Also, as the size of the request packet decreases, system resources consumed during the communication process may be saved. Therefore, the control unit 130 may determine an integration offset that may be expressed by integrating the offsets of the plurality of target batteries, and generate offset information according to the determined integration offset.

The control unit 130 may be configured to determine the integration offset by changing a bit corresponding to each of the plurality of target batteries in the initial offset in which bits respectively corresponding to the batteries included in the battery list L are preset.

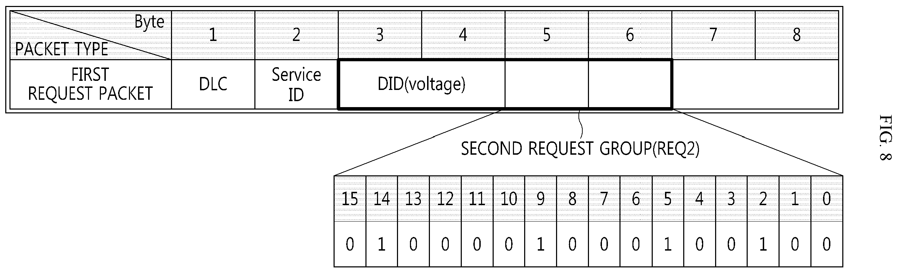

FIG. 8 is a diagram schematically showing a second embodiment of the request packet according to an embodiment of the present disclosure.

For example, in the embodiment of FIG. 8, the target information included in the second request group (REQ2) is voltage, and the target battery is the third battery, the sixth battery, and the tenth battery.

Specifically, referring to the battery list L in FIG. 2, the offset of the third battery is "3", the offset of the sixth battery is "6", and the offset of the tenth battery is "10". The control unit 130 may determine the integration offset by changing the bits corresponding to the offsets of the third battery, the sixth battery, and the tenth battery to "1". In the determined integration offset, the third, sixth, and tenth bits from the bottom are 1, and the remaining bits are 0. In other words, the determined integration offset is "00001000100100".

In addition, in the embodiment of FIG. 8, the control unit 130 may set the number information to "1" because the target battery is some of the batteries included in the battery list L. Also, the control unit 130 may set the packet type information to "0" based on the request data amount corresponding to the request group.

That is, the request packet according to the embodiment of FIG. 8 is a first request packet based on the first packet structure, and may include the content requesting voltage information for the third battery, the sixth battery, and the tenth battery.

The apparatus 100 for requesting battery information according to an embodiment of the present disclosure may selectively request only target information for the target battery by determining the integration offset. Therefore, the apparatus 100 for requesting battery information may improve processing speed in the process of obtaining the target information about the target battery and has the advantage of saving system resources unnecessarily consumed.

When there is a plurality of target information, the control unit 130 may be configured to generate a plurality of request groups including target battery information corresponding to each target information and generate a request packet to include the plurality of request groups.

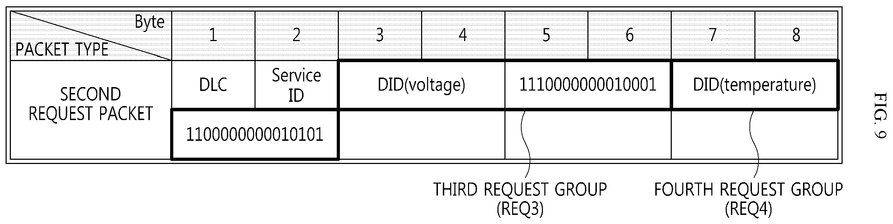

FIG. 9 is a diagram schematically showing a third embodiment of the request packet according to an embodiment of the present disclosure.

For example, in the embodiment of FIG. 9, a third request group (REQ3) and a fourth request group (REQ4) may be included. The control unit 130 calculates the data amount for the third request group (REQ3) and the fourth request group (REQ4), and based on the calculated data amount, generate the request packet according to the embodiment of FIG. 9 as a second request packet based on the second packet structure. Accordingly, the packet type information of the third request group (REQ3) and the fourth request group (REQ4) may all be set to "1".

In the embodiment of FIG. 9, the target information included in the third request group (REQ3) is voltage, and the target battery is the first battery, the fifth battery, and the fourteenth battery. Since some batteries among the plurality of batteries included in the battery list L are selected as the target battery, the control unit 130 may set the number information included in the third request group (REQ3) to "1". The control unit 130 may set the integration offset to "10000000010001" in consideration of the offsets of the selected target batteries. That is, in the integration offset, the first, fifth, and fourteenth bits from the bottom may be set to "1".

In the embodiment of FIG. 9, the target information included in the fourth request group (REQ4) is temperature, and the target battery is the first battery, the third battery, and the fifth battery. Since some batteries among the plurality of batteries included in the battery list L are selected as the target battery, the control unit 130 may set the number information included in the fourth request group (REQ4) to "1". The control unit 130 may set the integration offset to "00000000010101" in consideration of the offsets of the selected target batteries. That is, in the integration offset, the first, third, and fifth bits from the bottom may be set to "1".

That is, the request packet according to the embodiment of FIG. 9 is a second request packet based on the second packet structure, and may include the content requesting voltage information for the first battery, the fifth battery, and the fourteenth battery and temperature information for the first battery, the third battery, and the fifth battery.

The apparatus 100 for requesting battery information according to an embodiment of the present disclosure has the advantage of not only selectively requesting information about a target battery, but also collectively requesting a plurality of target information in a bundle. In particular, since the target batteries respectively corresponding to the plurality of target information may be different from each other, the apparatus 100 for requesting battery information has the advantage of effectively transmitting desired battery information through one request packet.

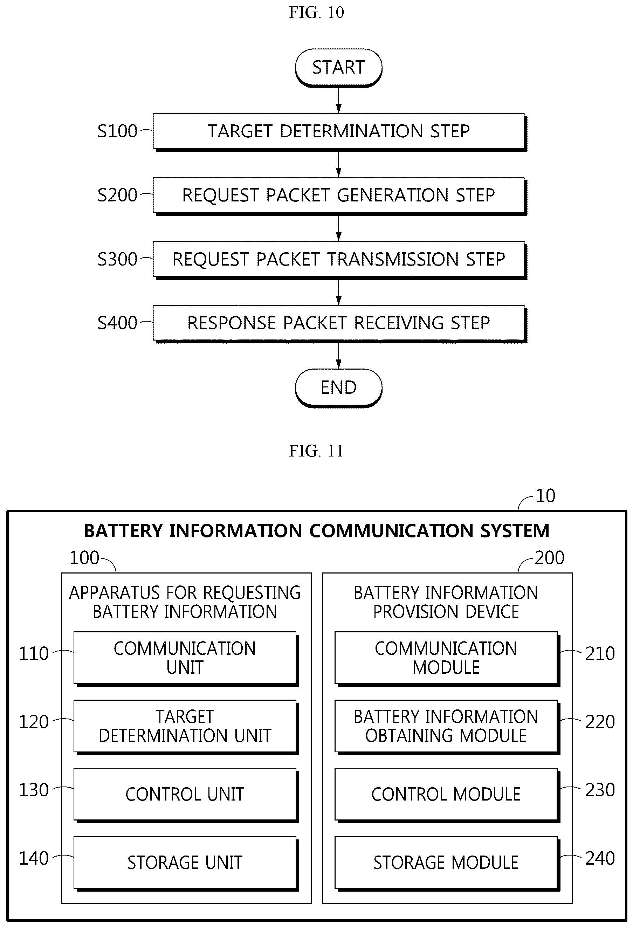

FIG. 10 is a diagram schematically showing a method for requesting battery information according to another embodiment of the present disclosure.

Preferably, each step of the method for requesting battery information may be performed by the apparatus 100 for requesting battery information. Hereinafter, for convenience of explanation, the content overlapping with the previously described content will be omitted or briefly described.

The method for requesting battery information may include a target determination step (S100), a request packet generation step (S200), a request packet transmission step (S300), and a response packet receiving step (S400).

The determination target step (S100) is a step of determining target information to be obtained and a target battery for which the target information is to be obtained from a preset battery list L, and may be performed by the target determination unit 120.

For example, in the embodiment of FIG. 7, the target determination unit 120 may determine the target information as voltage and the target battery as all batteries included in the battery list L.

As another example, in the embodiment of FIG. 8, the target determination unit 120 may determine the target information as voltage and the target battery as the third battery, the sixth battery, and the tenth battery.

As still another example, in the embodiment of FIG. 9, the target determination unit 120 may determine the target information as voltage and the target battery as the first battery, the fifth battery, and the fourteenth battery. Also, the target determination unit 120 may determine the target information as temperature and the target battery as the first battery, the third battery, and the fifth battery.

The request packet generation step (S200) is a step of generating a request packet including target battery information about the target battery and the target information, and may be performed by the control unit 130.

For example, in the embodiment of FIG. 7, the control unit 130 may generate a request packet including the first request group (REQ1).

As another example, in the embodiment of FIG. 8, the control unit 130 may generate a request packet including the second request group (REQ2).

As still another example, in the embodiment of FIG. 9, the control unit 130 may generate a request packet including the third request group (REQ3) and the fourth request group (REQ4).

The request packet transmission step (S300) is a step of transmitting the generated request packet, and may be performed by the control unit 130.

Specifically, the control unit 130 may transmit the request packet to the battery information provision device 200 through the communication unit 110.

The response packet receiving step (S400) is a step of receiving a response packet including battery information of the target battery corresponding to the target information in response to the request packet, and may be performed by the control unit 130.

Specifically, the control unit 130 may receive a response packet from the battery information provision device 200 through the communication unit 110.

For example, in the embodiment of FIG. 7, the control unit 130 may receive a response packet including the voltage information for all batteries included in the battery list L.

As another example, in the embodiment of FIG. 8, the control unit 130 may receive a response packet including the voltage information for the third battery, the sixth battery, and the tenth battery.

As still another example, in the embodiment of FIG. 9, the control unit 130 may receive a response packet including the voltage information for the first battery, the fifth battery, and the fourteenth battery and the temperature information for the first battery, the third battery, and the fifth battery.

FIG. 11 is a diagram schematically showing a battery information communication system according to still another embodiment of the present disclosure.

Referring to FIG. 11, the battery information communication system may include the apparatus 100 for requesting battery information, and a battery information provision device 200. Specifically, the battery information provision device 200 may include a communication module 210, a battery information obtaining module 220, a control module 230, and a storage module 240.

The communication module 210 may be configured to communicate with the apparatus 100 for requesting battery information.

For example, the communication module 210 may be connected to the apparatus 100 for requesting battery information to enable wired and/or wireless communication. Specifically, the communication module 210 may be connected to communicate with the communication unit 110.

The battery information obtaining module 220 may be configured to receive a request packet from the apparatus 100 for requesting battery information through the communication module 210.

In addition, the battery information obtaining module 220 may be configured to determine a target battery from the request packet using the battery list L and obtain battery information corresponding to the target information for the determined target battery.

Specifically, the battery information obtaining module 220 may determine the target battery and the target information corresponding to the received request packet. For example, the battery information obtaining module 220 may determine the target battery by matching the offset included in the target battery information to the battery list L. Also, the battery information obtaining module 220 may obtain battery information of the target battery corresponding to the target information included in the request packet by accessing the storage module 240.

Here, the storage module 240 is not particularly limited in its type as long as it is a known information storage means that is capable of recording, erasing, updating, and reading data. For example, the storage module 240 may include various battery information that can be measured by a measurement unit (not shown), and the battery information may include voltage, current, temperature, resistance, SOC, and SOH.

The control module 230 may be configured to generate a response packet including the target information and the battery information.

Specifically, the control module 230 may generate a response group including the battery information obtained by the battery information obtaining module 220 and generate a response packet including the generated response group.

For example, the control module 230 may be configured to calculate a response data amount corresponding to the generated response group and generate a response packet with a packet structure corresponding to the response data amount among the first packet structure and the second packet structure. Here, the target information may be the same as the target information included in the request packet. Also, the battery information may be a value of the target information for the target battery.

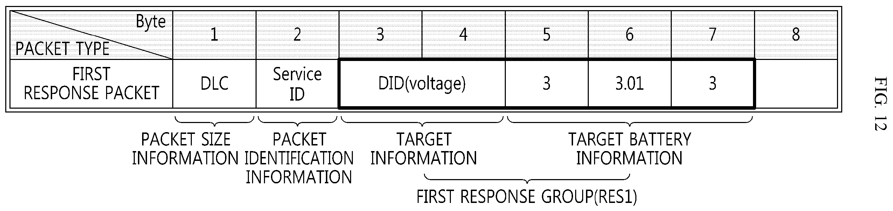

FIG. 12 is a diagram schematically showing a first embodiment of a response packet according to an embodiment of the present disclosure.

Specifically, the response packet according to the embodiment of FIG. 12 may correspond to the request packet according to the embodiment of FIG. 8. Referring to FIG. 12, the response packet may include packet size information, packet identification information, and first response group (RES1). Also, the first response group (RES1) may include target information (voltage) and voltage values for the third battery, the sixth battery, and the tenth battery. For example, the voltage value for the third battery may be 3V, the voltage value for the sixth battery may be 3.01V, and the voltage value for the tenth battery may be 3V.

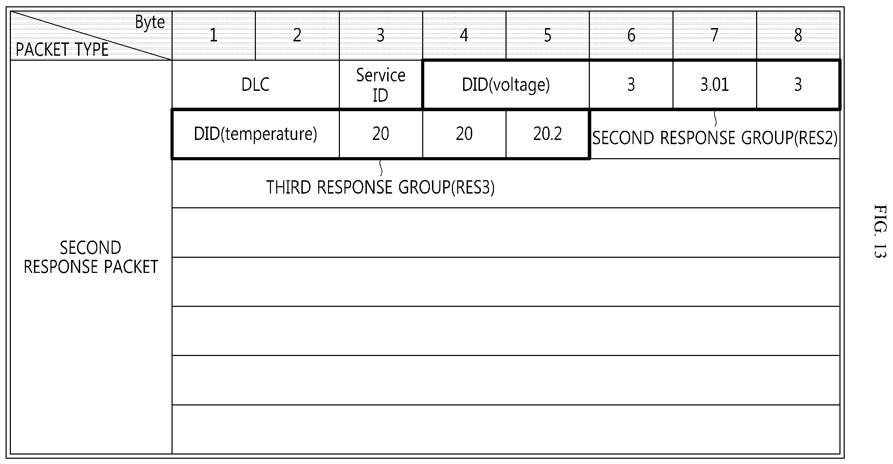

FIG. 13 is a diagram schematically showing a second embodiment of the response packet according to an embodiment of the present disclosure.

Also, the response packet according to the embodiment of FIG. 13 may correspond to the request packet according to the embodiment of FIG. 9. Referring to FIG. 13, the response packet may include packet size information, packet identification information, second response group (RES2), and third response group (RES3). Also, the second response group (RES2) may include target information (voltage) and voltage values for the first battery, the fifth battery, and the fourteenth battery. For example, the voltage value for the first battery may be 3V, the voltage value for the fifth battery may be 3.01V, and the voltage value for the fourteenth battery may be 3V.

In addition, the third response group (RES3) may include target information (temperature) and temperature values for the first battery, the third battery, and the fifth battery. For example, the temperature value for the first battery may be 20°C, the temperature value for the third battery may be 20°C, and the temperature value for the fifth battery may be 20.2°C.

The control module 230 may be configured to transmit a response packet to the apparatus 100 for requesting battery information through the communication module 210 in response to the request packet.

Accordingly, the apparatus 100 for requesting battery information may obtain the value of the target information for the target battery by receiving a response packet corresponding to the request packet from the battery information provision device 200.

The battery information provision system 10 according to an embodiment of the present disclosure is configured to request and respond only to the target information for the target battery among the plurality of batteries included in the battery list L, so the apparatus 100 for requesting battery information may save time taken for obtaining the desired battery information. In addition, since the target information for the target battery is not selected after the target information for all batteries is requested and responded to, it is possible to prevent the system resources of the battery information provision system 10 from being unnecessarily wasted during the request and response process for the battery information.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Additionally, many substitutions, modifications and changes may be made to the present disclosure described hereinabove by those skilled in the art without departing from the technical aspects of the present disclosure, and the present disclosure is not limited to the above-described embodiments and the accompanying drawings, and each embodiment may be selectively combined in part or in whole to allow various modifications.

### Reference Signs

- 10:: battery information provision system
- 100:: apparatus for requesting battery information
- 110:: communication unit
- 120:: target determination unit
- 130:: control unit
- 140:: storage unit
- 200:: battery information provision device
- 210:: communication module
- 220:: battery information obtaining module
- 230:: control module
- 240:: storage module

## Claims

1. An apparatus for requesting battery information, comprising:
a communication unit configured to communicate with a battery information provision device;
a target determination unit configured to determine target information to be obtained and determine a target battery for which the target information is to be obtained from a preset battery list; and
a control unit configured to generate a request packet including target battery information about the target battery and the target information, transmit the generated request packet to the battery information provision device through the communication unit, and receive a response packet including battery information of the target battery corresponding to the target information from the battery information provision device through the communication unit in response to the request packet.

2. The apparatus for requesting battery information according to claim 1,
wherein the control unit is configured to generate a request group including the target information and the target battery information, and generate the request packet to include the generated request group.

3. The apparatus for requesting battery information according to claim 2,
wherein the control unit is configured to generate the target battery information to include preset first number information when the target battery is determined to be all batteries included in the battery list.

4. The apparatus for requesting battery information according to claim 2,
wherein the control unit is configured to generate the target battery information to include preset second number information and offset information of the target battery when the target battery is determined to be some of the batteries included in the battery list.

5. The apparatus for requesting battery information according to claim 4,
wherein when the target battery is plural, the control unit is configured to determine an integration offset based on offsets corresponding to the plurality of target batteries and generate the offset information according to the determined integration offset.

6. The apparatus for requesting battery information according to claim 5,
wherein the control unit is configured to determine the integration offset by changing a bit corresponding to each of the plurality of target batteries in an initial offset in which a bit corresponding to each battery included in the battery list is preset.

7. The apparatus for requesting battery information according to claim 2,
wherein the control unit is configured to generate the request packet to include packet size information of the request packet, packet identification information of the request packet, and information about the request group.

8. The apparatus for requesting battery information according to claim 7,
wherein the control unit is configured to include packet type information of the request packet at a predetermined position in the target battery information.

9. The apparatus for requesting battery information according to claim 2,
wherein when the target information is plural, the control unit is configured to generate a plurality of request groups including target battery information corresponding to each target information, and generate the request packet to include the plurality of request groups.

10. A method for requesting battery information, comprising:
a target determination step of determining target information to be obtained and determining a target battery for which the target information is to be obtained from a preset battery list;
a request packet generation step of generating a request packet including target battery information about the target battery and the target information;
a request packet transmission step of transmitting the generated request packet; and
a response packet receiving step of receiving a response packet including battery information of the target battery corresponding to the target information in response to the request packet.

11. A battery information communication system, comprising:
the apparatus for requesting battery information according to any one of claims 1 to 9; and
a battery information provision device, which includes:
a communication module configured to communicate with the apparatus for requesting battery information;
a battery information obtaining module configured to receive the request packet from the apparatus for requesting battery information through the communication module, determine the target battery from the request packet using the battery list, and obtain the battery information corresponding to the target information for the determined target battery; and
a control module configured to generate the response packet including the target information and the battery information, and transmit the response packet to the apparatus for requesting battery information through the communication module in response to the request packet.
